Europäisches Patentamt

European Patent Office

Office européen des brevets

(19)

(11) **EP 0 720 306 B1**

(12) **EUROPEAN PATENT SPECIFICATION**

(45) Date of publication and mention
of the grant of the patent:
**14.11.2001 Bulletin 2001/46**

(51) Int Cl.⁷: **H04B 1/58**, H04M 1/58

(21) Application number: **95203544.2**

(22) Date of filing: **19.12.1995**

(54) **Transmission hybrid**

Hybridschaltung eines Übertragungssystems

Circuit hybride de transmission

(84) Designated Contracting States:
**AT BE CH DE DK ES FR GB GR IE IT LI LU NL PT
SE**

(30) Priority: **02.01.1995 NL 9500005**

(43) Date of publication of application:
**03.07.1996 Bulletin 1996/27**

(73) Proprietor: **Koninklijke KPN N.V.
9726 AE Groningen (NL)**

(72) Inventor: **Tan, Han Hiong
NL-2651 VD Berkel en Rodenrijs (NL)**

(56) References cited:
**EP-A- 0 155 570**     **US-A- 4 103 118**

- **PATENT ABSTRACTS OF JAPAN vol. 13 no. 578
(E-864) ,20 December 1989 & JP-A-01 241954
(NEC) 26 September 1989,**

**Description**

The invention relates to a control circuit for automatically adjusting a transmission hybrid. Hybrids are generally known, inter alia from the published Dutch Patent Application NL 8500225 in the name of the Applicant.

In particular, US-A-4,103,118 discloses a control circuit for automatically adjusting a transmission hybrid which comprises a transmission/reception port for the connection of a two-wire connection, and also a transmission port and a reception port for the connection of a four-wire connection, and an impedance port for the connection of a controllable balance impedance ($Z_b$), which control circuit compromises a unidirectional device which is provided with an input and output and which is capable of transmitting alternating-voltage signals from its input to its output but not from its output to its input, the output of said unidirectional device being connected to the reception port of the hybrid which control circuit furthermore comprises a detection device for detecting signal levels and emitting a control signal and which adjusts the balance impedance, during the influence of the control signal from said detection device, in such a way that the detected signal level at the transmission port is a minimum and maintains said adjustments as long as the control signal is present.

A hybrid comprises per se a transmission port, a reception port and a transmission/reception port. The transmission port and the reception port are connected to a four-wire connection (a two-wire transmission connection and a two-wire reception connection) an the transmission/reception port is connected to a two-wire transmission/reception connection. Moreover, a hybrid also comprises an impedance port to which a controllable balance impedance is connected in order to avoid crosstalk from the reception port the transmission port.

It is generally known that the hybrid operates optimally if the balance impedance is equal to the impedance of the (two-wire) cable connected to the transmission/reception port. In that case, the attenuation between the reception port and transmission port of the four-wire section is a maximum, as a result of which signals fed to the reception port are not passed to the transmission port (minimum crosstalk). A problem is that, if the hybrid is incorporated in a switched network, the impedance of the cable may change. If a hybrid is to operate optimally, regular readjustment of the balance impedance is necessary.

The present invention according to claim 1 provides means for automatically adjusting the balance impedance. The control circuit according to the present invention is therefore characterized in that the said detection device is connected to said input (b) and said output (a) of said unidirectional device and detects said signal levels at said input and said output and emits said control signal if the signal level at the input (b) of the unidirectional device rises above a minimum value and if at the same time, taking the gain factor of the unidirectional deyice into account, the signal level at the output (a) of the unidirectional device is identical to the signal level at the input (b) of said unidirectional device, which control circuit comprises, moreover, a control device, connected to said transmission port, for detecting the signal level at said port and connected, moreover, to said controllable balance impedance ($Z_b$).

The invention is based on the insight that, during the transmission of signals via the hybrid, at those instants when signal is presented exclusively at the reception port of the hybrid (that is to say not at the ("two wire") transmission/reception port), no signal must be present at the transmission port if the balance impedance is correctly adjusted. If that were nevertheless to be the case, it is the consequence of incorrect balance impedance, as a result of which the attenuation between the reception port an the transmission port is not a maximum. During transmission, the instants when signal is presented exclusively at the reception port lend themselves pre-eminently to readjusting the balance impedance so that the attenuation between the reaction port and the transmission port is a maximum. The invention provides means for detecting said instants and for utilizing them for automatically readjusting the balance impedance.

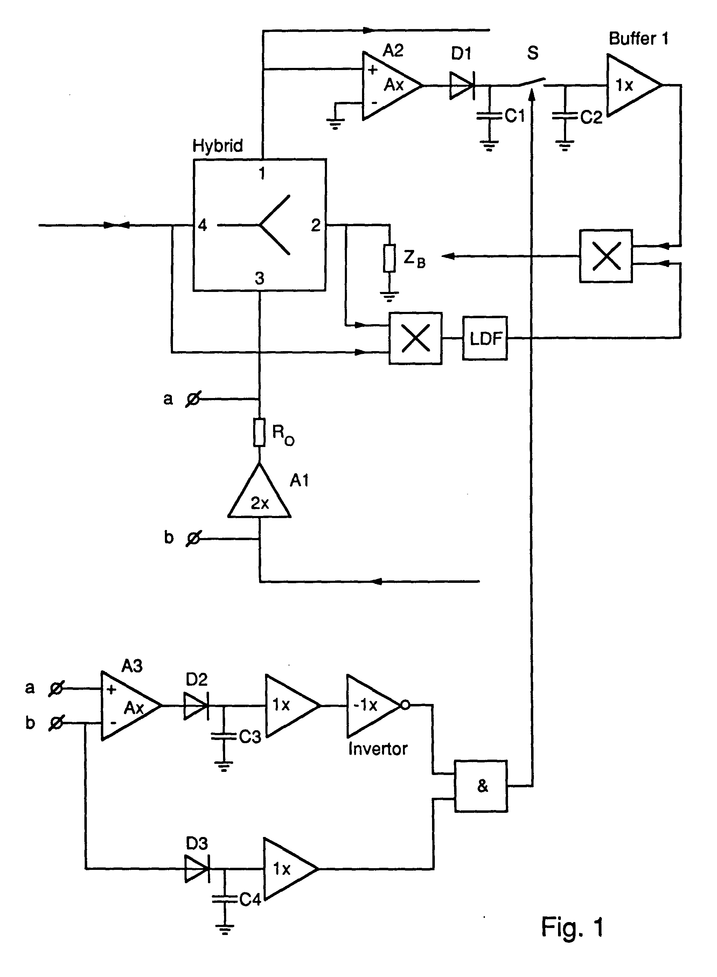

To detect the situation where signal is in fact being received at the reception port but not at the transmission/reception port, use us made, according to the invention, of a unidirectional device for signals which is capable of transmitting signal from its input to its output but nor from its output to its input. Suitable for such a device is a signal amplifier, a signal buffer and the like. As a result of incorporating such a device in the channel which is connected to the reception port, it is possible to detect whether signals appearing at the reception port originate from the transmission/reception port or from the cannel connected to the reception port or from both. Detection thereof takes place by investigating whether signal is present at the input of the unidirectional device and whether, when the gain factor of said device is taken into account, the signal at the input of the device is equally as great as the signal at the output. As will be discussed below by reference to a figure, signal is presented to the reception port of the hybrid in that case alone. As soon as said situation is detected, it is possible to detect at the transmission port whether crosstalk may be occurring between the reception port and transmission port and, if that should be the case, it is possible to adjust the balance impedance automatically so that said crosstalk is eliminated. The operation of the invention will now be discussed in greater detail by reference to Figure 1 and an exemplary embodiment will be provided.

Figure 1 shows a transmission hybrid having a transmission port 1, a balance impedance port 2, a reception port 3 and a transmission/reception port 4. A bidirectional channel is connected to the latter and unidirectional channel is connected in each case to ports 1 and 3. Connected to the impedance port is controllable balance impedance $Z_b$.

$Z_b$ must always be adjusted so that the crosstalk between the ports 3 and 1 is a minimum: signal received via port 3 is not the passed to transmission port 1. Since the impedance of the channel (cable, line) connected to port 4 vary (for this problem, see also the abovementioned, incorporated application), it is necessary to investigate continuously or at least regularly whether the balance impedance is still actually correctly adjusted, namely is such a way that the transit attenuation between the ports 3 and 1 is a maximum. As has been explained above, said check can be carried out very well at those instants when (external) signal is presented at port 3 while the port 3 is receiving no signal originating from port 4 (if port 4 is receiving signal, said signal is distributed over the ports 1 and 3 by the hybrid).

To be able to detect said check instants, a unidirectional device, that is to say a device which can in fact allow signal through from its input to its output, but not vice versa, is incorporated in the channel connected to the reception port 3. The unidirectional device is in this case formed by a signal amplifier Al having a net gain factor of 1. A signal destined for reception port 3 is thus detectable at the points a and b; the signal strength is equally great at both points. A signal originating from port 4 via the hybrid is in fact detectable at point a, but not at point b. Thus, it is found that the check instants occur if:

- the signal strength at point b is greater than "0", and
- the signal strength at the points a and b is identical.

After all, if port 3 is receiving signal from port 4 via the hybrid as an externally presented signal, the signal strength at point a will be greater than at point b. If neither an external signal nor an internal signal (originating from an external signal presented at port 4 via the hybrid) is being presented at port 3, the signal strength at a and b is in fact equal, but the signal strength at point b is not greater than "0" (minimum detection value).

The detection of the conditions mentioned above, which are characteristic of the check instants, is performed by a detection circuit shown at the bottom of Figure 1. There the signals of a and b are presented to an amplifier A3 which subtracts said signals from one another. If said signals are identical, there is no output voltage. In all other cases, an alternating voltage is present at the output of A3. Said alternating voltage is rectified and smoothed by a diode D2 and a capacitor C3, inverted by an inverter via a buffer and presented to an AND gate. The signal originating from point b is itself also rectified and smoothed, by a diode D3 and a capacitor C4, and presented to said AND gate via a buffer. The output of the AND gate is only "high" if the signal strengths of the signals originating from a and b are identical and if signal b is present (signal strength b > "0").

The output signal originating from the AND gate controls a control circuit which is shown at the top of the figure. The signal at port 1 is compared with earth by an amplifier A2. If there is signal at port 1 (which is only the case at a check instant if the balance impedance is incorrect), said signal is amplified by A2. The output signal is rectified and smoothed and is used to adjust the balance impedance Zb, together with a phase signal whose polarity depends on whether the signals at the reception port and the transmission port are identical or have opposite phase. A switching device S closes only if the output of the AND port is high. In that case, the voltage across the capacitor C1 is taken over by a capacitor C2. Via a buffer, which ensures that C2 does not discharge, the balance impedance Zb is then adjusted by the voltage across C2. As soon as the AND gate becomes low (when the check instant has passed), the switching device S opens and C2 holds its charge and Zb retains its last value.

The phase signal, which is combined with the rectified and smoothed output signal of A2 by an analog multiplier, ensures that Zb is adjusted in the correct direction: in the case of a positive value, Zb has to be adjusted to a lower value and in the case of a negative value it has to be adjusted to a higher value. The phase signal is derived from the mutual phase of the signals at the transmission/reception port 4 and the impedance port 2. It is known that, in the event of phase equality of the signal at the reception port 3 and the crosstalk signal at the transmission port 1, phase equality also occurs between the signals at the transmission/reception port 4 and the impedance port 2. The same happens if the phases are opposed. Since the signal amplitudes at the ports 2 and 4 are equally great (in contrast to those at the ports 1 and 3), the phase information is taken from the ports 2 and 4. In an analog phase comparator, the signals originating from the ports 2 and 4 are multiplied by one another (after any amplitude differences have been eliminated), as a result of which a direct voltage is produced whose sign depends on the mutual phase of the signals at the ports 2 and 4. Multiplication of the two identical signals (both $A\sin\omega t$) by the same phase gives, in fact, $\sin^2\omega t$, which is equal to $\frac{1}{2}A(1-\cos 2\omega t) = \frac{1}{2}A-\frac{1}{2}A\cos 2\omega t$, of which the first term is a direct-voltage component. Multiplication of two signals having opposite phase gives $-\sin^2\omega t$, which is equal to $-\frac{1}{2}A(1-\cos 2\omega t) = -\frac{1}{2}A+\frac{1}{2}A\cos 2\omega t$. The alternating-voltage component can be eliminated by means of a low-pass filter (LDF) and $+\frac{1}{2}A$ or $-\frac{1}{2}A$, respectively, is left over. These values are multiplied by the rectified and smoothed output signal of A2, as a result of which a control signal is produced whose direction and magnitude can be used to change the adjustment of Zb in such a way that the crosstalk signal at port 1 is adjusted downwards. The setting of Zb is adjusted at every check instant which is detected by the detection circuit at the bottom of the figure, as a function of the crosstalk signal detected by A2 on port 1. If there is no crosstalk, the voltage across C2 remains unchanged and, consequently, so does the setting of Zb.

It is pointed out that where "check instant" is mentioned above, it should be clear that said check instant may last a shorter or a longer time, namely the time that the abovementioned conditions (signal b > "0" and signal a equal to signal b) last.

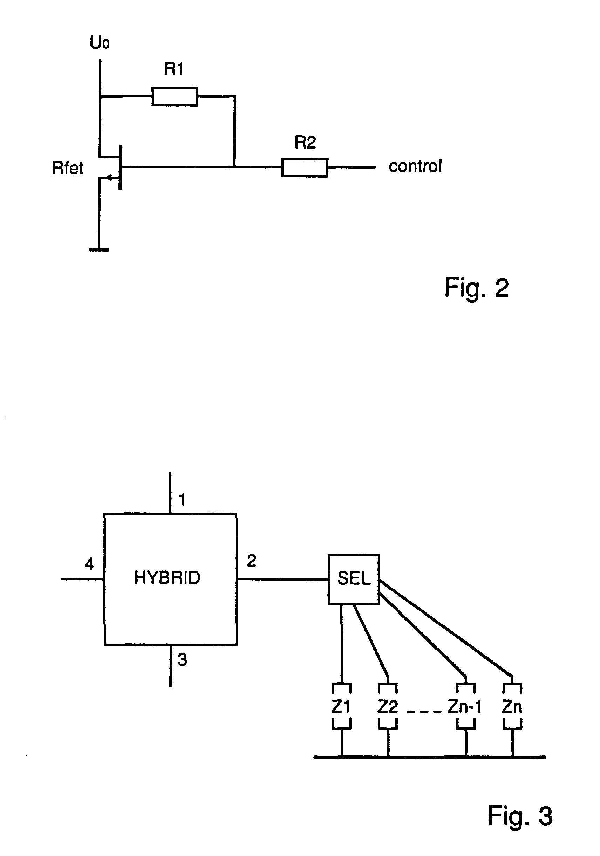

Zb can be controlled by means of a control voltage by making use of an FET which is used "below pinch-off", as a result of which the FET operates as voltage-dependent resistor (real balance impedance). Such a circuit is shown in Figure 2. The resistance across the FET is

$$R_{fet} = \frac{1}{g\{1+(U_{control}+U_o)/2U_p\}}$$

where g is the slope and $U_p$ is the pinch-off voltage. R1 and R2 are necessary to linearize the FET.

To control a complex Zb by a control voltage, use can be made, for example, of a control system which is shown in Figure 3. This has a close relationship to the circuit which is described in the incorporated application mentioned. Under the influence of the control voltage, that impedance at which the crosstalk attenuation is a maximum is chosen from a number of complex impedances by a selection device.

## Claims

1. A control circuit for automatically adjusting a transmission hybrid which comprises a transmission/reception port (4) for the connection of a two-wire connection, and also a transmission port (1) and a reception port (3) for the connection of a four-wire connection, and an impedance port (2) for the connection of a controllable balance impedance ($Z_b$), which control circuit comprises a unidirectional device, which is provided with an input (b) and an output (a) and which is capable of transmitting alternating-voltage signals from its input to its output but not from its output to its input, the output (a) of said unidirectional device being connected to the reception port (3) of the hybrid, which control circuit furthermore comprises a detection device for detecting signal levels and emitting a control signal and which adjusts the balance impedance, during the influence of the control signal from said detection device, in such a way that the detected signal level at the transmission port (4) is a minimum and maintains said adjustment as long as the control signal is present, **characterized in that** the said detection device is connected to said input (b) and said output (a) of said unidirectional device and detects said signal levels at said input and said output and emits said control signal if the signal level at the input (b) of the unidirectional device rises above a minimum value and if at the same time, taking the gain factor of the unidirectional device into account, the signal level at the output (a) of the unidirectional device is identical to the signal level at the input (b) of said unidirectional device, which control circuit comprises, moreover, a control device, connected to said transmission port (1) for detecting the signal level at said port and connected, moreover, to said controllable balance impedance ($Z_b$).

2. The control circuit as claimed in claim 1, **characterized in that** said unidirectional device is an amplifier ($A_1$).

3. The control circuit as claimed in claim 1 or 2 **characterized in that** said detection device comprises a differential amplifier ($A_3$) connected to the input (b) and output (a) of said unidirectional device, and also an AND gate of which the one input is connected, via a rectifier and smoothing circuit ($D_2$, $C_3$) and via an inverter device, to the output of said differential amplifier ($A_3$), while the other input of the AND gate is connected, also via a rectifier and smoothing circuit ($D_3$, $C_4$) but without inverter device, to the input (b) of the unidirectional device.

4. The control circuit as claimed in any one of claims 1-3, **characterized in that** said control device comprises a switching device (S) which is controllable by the output of said AND gate and **in that** the signal from the transmission port (1) is, moreover, presented, together with a phase signal of which the sign indicates the phase of the signal at the transmission port (1) with respect to that at the reception port (3), to a control input (2) of the controllable balance impedance ($Z_b$) via a rectifier and smoothing circuit (D1, C1).

5. The control circuit as claimed in claim 4, **characterized by** a polarity controller of which inputs are connected to the transmission/reception port (4) and the balance impedance port (2) and which emits said phase signal as a function of the mutual phase between signals detected at said ports (2, 4).

6. The control circuit as claimed in claim 4, **characterized in that** the controllable balance impedance ($Z_b$) comprises and FET which is adjusted into "pinch-off mode" and of which output resistance is determined by the magnitude and the sign of the signal presented at its control input.

7. The control circuit as claimed in claim 4, **characterized in that** the controllable impedance comprises a selector (SEL) which selects one of a plurality of

balance impedances ($Z_1$ ----- $Z_n$) as a function of the magnitude and the sign of the signal presented at its input.

**Patentansprüche**

1. Steuerschaltkreis zum automatischen Einstellen einer Hybridschaltung eines Übertragungssystems, welcher ein Übertragungs-/Empfangsport (4) für die Verbindung einer Zwei-Leitungsverbindung umfasst und auch ein Übertragungsport (1) und ein Empfangsport (3) für eine Verbindung einer Vier-Drahtverbindung umfasst und einen Impedanzport (2) für die Verbindung einer steuerbaren Ausgleichsimpedanz ($Z_b$) umfasst, wobei der Steuerschaltkreis eine unidirektionale Einrichtung aufweist, die mit einem Eingang (b) und einem Ausgang (a) versehen ist und die fähig ist, alternierende Spannungssignale von ihrem Eingang zu ihrem Ausgang zu übertragen, aber nicht vom Ausgang zum Eingang, wobei der Ausgang (a) der besagten unidirektionalen Einrichtung mit einem Empfangsport (3) der Hybridschaltung verbunden ist, welcher Steuerschaltkreis weiterhin eine Erfassungseinrichtung umfasst, um Signalniveaus festzustellen und ein Steuersignal auszusenden, und welche die Ausgleichsimpedanz während des Einflusses des Steuersignals von der besagten Erfassungsvorrichtung in solch einer Weise einstellt, dass das erfasste Signalniveau am Übertragungsport (4) minimal ist, und diese Einstellung so lange beibehält, wie das Steuersignal vorhanden ist, **dadurch gekennzeichnet, dass** die besagte Erfassungseinrichtung mit dem besagten Eingang (b) und besagten Ausgang (a) der besagten unidirektionalen Einrichtung verbunden ist und besagte Signalniveaus am besagten Eingang und besagten Ausgang erfasst und das besagte Steuersignal aussendet, falls das Signalniveau am Eingang (b) der unidirektionalen Einrichtung über einen gewissen Minimalwert ansteigt und falls zur selben Zeit unter Berücksichtigung des Verstärkungsfaktors der unidirektionalen Einrichtung das Signalniveau am Ausgang (a) der unidirektionalen Einrichtung gleich ist zum Signalniveau am Eingang (b) der besagten unidirektionalen Einrichtung, wobei der Steuerschaltkreis darüber hinaus eine Steuereinrichtung umfasst, die mit dem besagten Übertragungsport (1) verbunden ist, um das Signalniveau an dem besagten Port zu erfassen, und die weiterhin mit der besagten steuerbaren Ausgleichsimpedanz ($Z_b$) verbunden ist.

2. Steuerschaltkreis nach Anspruch 1, **dadurch gekennzeichnet, dass** die besagte unidirektionale Einrichtung ein Verstärker ist ($A_1$).

3. Steuerschaltkreis nach Anspruch 1 oder 2, **da-**

**durch gekennzeichnet, dass** die besagte Erfassungseinrichtung einen Differenzverstärker ($A_3$) aufweist, der mit dem Eingang (b) und dem Ausgang (a) der besagten unidirektionalen Einrichtung verbunden ist, und auch ein UND-Gatter, von dem der eine Eingang über einen Gleichrichtungs- und Glättungsschaltkreis ($D_2$, $C_3$) und über eine Invertiereinrichtung mit dem Ausgang des besagten Differenzverstärkers ($A_3$) verbunden ist, während der andere Eingang des UND-Gatters über einen Gleichrichtungs- und Glättungsschaltkreis ($D_3$, $C_4$) aber ohne die Invertiereinrichtung mit dem Eingang (b) der unidirektionalen Einrichtung verbunden ist.

4. Steuerschaltkreis nach einem der Ansprüche 1 bis 3, **dadurch gekennzeichnet, dass** der besagte Steuerschaltkreis eine Schalteinrichtung (S) umfasst, die durch den Ausgang des besagten UND-Gatters steuerbar ist, und dass das Signal von dem Übertragungsport (1) darüber hinaus zusammen mit einem Phasensignal, von dem das Zeichen die Phase des Signals am Übertragungsport (1) in Bezug auf diejenige am Empfangsport (3) anzeigt, an einen Steuereingang (2) der steuerbaren Ausgleichsimpedanz ($Z_b$) über einen Gleichrichtungs- und Glättungsschaltkreis ($D_1$, $C_1$) vorgelegt wird.

5. Steuerschaltkreis nach Anspruch 4, **dadurch gekennzeichnet, dass** eine Polarisationssteuereinrichtung vorgesehen ist, deren Eingänge mit dem Übertragungs-/Empfangsport (4) und dem Ausgleichs-Impedanzport (2) verbunden sind und welche das besagte Phasensignal als Funktion der gegenseitigen Phase zwischen den Signalen, die an den beiden Ports (2, 4) erfasst worden sind, überträgt.

6. Steuerschaltkreis nach Anspruch 4, **dadurch gekennzeichnet, dass** die steuerbare Ausgleichsimpedanz ($Z_b$) ein FET umfasst, der in dem sogenannten "Pinch-off"-Betrieb eingestellt wird und dessen Ausgangswiderstand durch Grösse und Vorzeichen von dem Signal festgelegt wird, welches an seinem Steuereingang anliegt.

7. Steuerschaltkreis nach Anspruch 4, **dadurch gekennzeichnet, dass** die steuerbare Impedanz einen Wähler (SEL) umfasst, der eine aus einer Vielzahl von Ausgleichsimpedanzen ($Z_1$ - $Z_n$) als Funktion von Grösse und Vorzeichen des an seinem Eingang vorliegenden Signals auswählt.

**Revendications**

1. Circuit de commande pour régler de manière automatique un circuit hybride de transmission qui comprend un port d'émission/réception (4) pour la connexion d'une connexion à deux fils et également un port d'émission (1) et un port de réception (3) pour la connexion d'une connexion à quatre fils et un port d'impédance (2) pour la connexion d'une impédance d'équilibrage commandable (Z$_b$), lequel circuit de commande comprend un dispositif unidirectionnel qui est muni d'une entrée (b) et d'une sortie (a) et qui peut transmettre des signaux de tension alternative depuis son entrée sur sa sortie mais pas depuis sa sortie sur son entrée, la sortie (a) dudit dispositif unidirectionnel étant connectée au port de réception (3) du circuit hybride, lequel circuit de commande comprend en outre un dispositif de détection pour détecter des niveaux de signal et pour émettre un signal de commande et lequel règle l'impédance d'équilibrage, pendant l'influence du signal de commande en provenance du dispositif de détection de telle sorte que le niveau de signal détecté au niveau du port d'émission (4) soit à un minimum et lequel maintient ledit réglage aussi longtemps que le signal de commande est présent, **caractérisé en ce que** ledit dispositif de détection est connecté à ladite entrée (b) et à ladite sortie (a) dudit dispositif unidirectionnel et il détecte lesdits niveaux de signal au niveau de ladite entrée et au niveau de ladite sortie et il émet ledit signal de commande si le niveau de signal au niveau de l'entrée (b) du dispositif unidirectionnel croît au-delà d'une valeur minimum et si dans le même temps, en prenant en compte le facteur de gain du dispositif unidirectionnel, le niveau de signal au niveau de la sortie (a) du dispositif unidirectionnel est identique au niveau de signal au niveau de l'entrée (b) dudit dispositif unidirectionnel, lequel circuit de commande comprend en outre un dispositif de commande qui est connecté audit port d'émission (1) pour détecter le niveau de signal au niveau dudit port et qui est connecté en outre à ladite impédance d'équilibrage commandable (Z$_b$).

2. Circuit de commande selon la revendication 1, **caractérisé en ce que** ledit dispositif unidirectionnel est un amplificateur (A$_1$).

3. Circuit de commande selon la revendication 1 ou 2, **caractérisé en ce que** ledit dispositif de détection comprend un amplificateur différentiel (A$_3$) qui est connecté à l'entrée (b) et à la sortie (a) dudit dispositif unidirectionnel, et également une porte ET dont une entrée est connectée via un circuit de redressage et de lissage (D$_2$, C$_3$) et via un dispositif d'inverseur à la sortie dudit amplificateur différentiel (A$_3$) tandis que l'autre entrée de la porte ET est connectée également via un circuit de redressage ou de lissage (D$_3$, C$_4$) mais sans dispositif d'inverseur à l'entrée (B) du dispositif unidirectionnel.

4. Circuit de commande selon l'une quelconque des revendications 1 à 3, **caractérisé en ce que** ledit dispositif de commande comprend un dispositif de commutation (S) qui peut être commandé au moyen de la sortie de ladite porte ET et **en ce que** le signal en provenance du port d'émission (1) est en outre présenté, en association avec un signal de phase dont le signe indique la phase du signal au niveau du port d'émission (1) par rapport à celui au niveau du port de réception (3), sur une entrée de commande (2) de l'impédance d'équilibrage commandable (Zb) via un circuit de redressage et de lissage (D1, C1).

5. Circuit de commande selon la revendication 4, **caractérisé par** un contrôleur de polarité dont les entrées sont connectées au port d'émission/réception (4) et au port d'impédance d'équilibrage (2) et qui émet ledit signal de phase en fonction de la phase mutuelle entre des signaux qui sont détectés au niveau desdits ports (2, 4).

6. Circuit de commande selon la revendication 4, **caractérisé en ce que** l'impédance d'équilibrage commandable (Zb) comprend un FET qui est réglé dans un "mode perçage" et dont une valeur de résistance de sortie est déterminée par l'amplitude et par le signe du signal qui est présenté au niveau de son entrée de commande.

7. Circuit de commande selon la revendication 4, **caractérisé en ce que** l'impédance commandable comprend un sélecteur (SEL) qui sélectionne l'une d'une pluralité d'impédances d'équilibrage (Z$_1$... Z$_n$) en fonction de l'amplitude et du signe du signal qui est présenté au niveau de son entrée.

Fig. 1

Uo

R1

Rfet

R2

control

## Fig. 2

1

4 HYBRID 2 SEL

3

Z1   Z2 _ _ _ _ Zn-1   Zn

## Fig. 3